# EUROPÄISCHE PATENTSCHRIFT

(11) **EP 1 310 535 B1**
(45) Veröffentlichungstag und Bekanntmachung des Hinweises auf die Patenterteilung: **12.03.2008**
(21) Anmeldenummer: 02024986.8
(22) Anmeldetag: 07.11.2002
(51) Int. Cl.: C09D 183/10, C09D 183/14

(54) **Verfahren zur Beschichtung von Oberflächen unter Verwendung von hybriden Polymermaterialien**
Process for coating surfaces with hybrid polymer compositions
Procédé de revêtement de surfaces utilisant des compositions de polymères hybrides

(30) Priorität: 13.11.2001 DE 10155613
(43) Veröffentlichungstag der Anmeldung: 14.05.2003
(73) Patentinhaber: Fraunhofer-Gesellschaft zur Förderung der angewandten Forschung e.V., 80686 München (DE)
(72) Erfinder: Kron, Johanna, Dr., 97776 Eussenheim (DE); Deichmann, Karl, 97084 Würzburg (DE); Schottner, Gerhard, Dr., 91560 Heilsbronn (DE)

(56) Entgegenhaltungen:
- EP-A- 0 358 011
- EP-A- 0 365 027
- EP-A- 0 610 831
- EP-A- 0 722 911
- DE-A- 3 836 815
- US-A- 5 952 044

## Beschreibung

Die Erfindung betrifft ein Verfahren zur Beschichtung von Oberflächen durch hybride Polymermaterialien.

Für viele Anwendungen werden Oberflächen von Substraten, insbesondere Aluminiumoberflächen, zum Zwecke der verbesserten Haftung und zum Korrosionsschutz mittels Chromatierverfahren vorbehandelt und anschließend mit organischen Ein- oder Mehrschichtssystemen lackiert. Die Chromatierung wird jedoch auf Grund der Toxizität von Chrom(VI)-Verbindungen sowohl bei Aluminium als auch bei anderen Metalloberflächen durch chromfreie Behandlungen ersetzt werden müssen.

Beschichtungen auf Sol-Gel-Basis stellen eine grundsätzliche Alternative zur Chromatierung dar und sind beispielsweise in den Patentanmeldungen DE 38 28 098, DE 34 07 087 und EP-A 0 610 831 beschrieben. Weitere Verfahren zur Oberflächenbeschichtung werden in den Anmeldungen US-A 5952044, EP-A 0610831 und EP-A 0722911 beschrieben. Damit Beschichtungen auf Sol-Gel-Basis eine echte Alternative zu Chromatierverfahren darstellen und zu marktfähigen Produkten entwickelt werden können, sind eine Reihe von Anforderungen zu stellen. Diese werden nachfolgend kurz erläutert:
1. Die Sole sollen methanolfrei sein.
2. Die Sole sollen wässrig, d. h. im Idealfall frei von weiteren Lösungsmitteln sein und einen hohen Flammpunkt aufweisen.
3. Die Solsynthese soll technisch einfach und somit kostengünstig sein.
4. Die zur Herstellung benötigten Ausgangsprodukte sollten kostengünstig sein.
5. Die Sole sollen möglichst lange Lager- und Topfzeiten aufweisen und mittels Nasslackverfahren wie Tauchen oder Spritzen applizierbar sein.
6. Die Behandlung des Substrats sollte bei Raumtemperatur möglich sein und lediglich kurze Behandlungszeiten erfordern, wobei maximale Härtungsbedingungen von 10 bis 15 Minuten bei 80°C bis 120°C zu nennen sind.
7. Die Schichtdicken sollten unterhalb von einem Mikrometer liegen und die Schicht eine gute Haftung zu den Oberflächen verschiedener Aluminiumlegierungen aufweisen.
8. Ebenfalls zu fordern ist eine gute Anbindung an verschiedene Primer- bzw. Deckschichten.
9. Anzustreben ist weiterhin ein gleichzeitiger Ersatz der Chromatierung und des Primers für z.B. 2K-PUR-Nasslacke.
10. Die beschichteten Substrate sollten im Dornbiegetest nach ISO 6860 (5 mm Dorn für 0,5 mm Bleche) Verformbarkeit aufweisen.
11. Sie sollten weiterhin beständig im Kochtest mit Nasshaftung gemäß GBGPB der GSB International, im Kondenswasserklimatest nach DIN 50017 (14 Tage) und im essigsauren Salzsprühtest (ESS nach ISO 9277; 1000 Stunden) sein.
12. Schließlich ist eine Verminderung der Filiformkorrosion für verschiedene Deckschichtverbunde zu fordern.

Die in den oben genannten Patentanmeldung beschriebenen Sol-Gel-Materialien erfüllen nur einen Teil der vorgenannten Anforderungen. Die meisten Sole lassen sich nicht in rein wässrige Systeme überführen, sind nicht lagerfähig (z. B. Materialien gemäß DE 38 28 098) oder versagen im Schichtverbund mit Nass- bzw. Pulverlacksystemen im Dornbiegetest (z. B. Materialien gemäß DE 38 28 098 und DE 34 07 087 auf Grund fehlender Flexibilität aber auch Materialien gemäß EP 0 610 831 mit relativ niedriger Oberflächenenergie) oder unter extremen Prüfbedingungen wie dem essigsauren Salzsprühtest nach ISO 9277 (z. B. alle Materialien gemäß DE 34 07 087 sowie Materialien gemäß EP 0 610 831 welche Titan- oder Zirkonester enthalten).

Der Erfindung liegt die Aufgabe zugrunde, ein Verfahren zur Beschichtung von Substratoberflächen, insbesondere von Aluminiumoberflächen, bereitzustellen, mit dem Beschichtungen erhalten werden können, welche das vorgenannte Eigenschaftsprofil aufweisen.

Gegenstand der Erfindung ist ein Verfahren zur Beschichtung von Oberflächen zum Erhalt einer Zwischenschicht auf der Oberfläche zur Anbindung eines Decklacks, umfassend die folgenden Stufen:
a) hydrolytische Kondensation, gegebenenfalls in Anwesenheit eines Kondensationskatalysators und/oder Additiven der folgenden Komponenten:
   (i) eines vernetzbares Silans der Formel (II)

      R"'ₘSiX₍₄₋ₘ₎

      in der die Gruppen X, die gleich oder verschieden sein können, Wasserstoff, Halogen, Alkoxy, Acyloxy, Alkylcarbonyl, Alkoxycarbonyl oder -NR''₂ (R'' = H und/oder Alkyl) bedeuten und die Reste R''', die gleich oder verschieden sein können, Alkyl, Alkenyl, Akinyl, Aryl, Arylalkyl, Alkylaryl, Arylalkenyl, Alkenylaryl, Arylakinyl oder Alkinylaryl darstellen, wobei diese Reste durch O- oder S-Atome oder die Gruppe -NR'' unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy- oder Vinylgruppen tragen können und m den Wert 1, 2 oder 3 hat, und/oder einem davon abgeleiteten Oligomeren, wobei der Rest R''' und/oder der Substituent eine vernetzbare Epoxygruppe ist bzw. umfasst, in einer Menge von 10 bis 98 Mol%, bezogen auf die Gesamtmolzahl der hydrolysierbaren Ausgangskomponenten, und
   (ii) eines Aluminiumalkoxids der Formel (III)

      Al (OR')₃

      worin die Reste R', die gleich oder verschieden sein können, für Alkyl oder -(CH₂)ₓ-O-(CH₂)_{y}-CH₃, worin x eine ganze Zahl von 1 bis 6 und y eine ganze Zahl von 0 bis 6 bedeutet, stehen, in einer Menge von 5 bis 75 Mol-%, bezogen auf die Gesamtmolzahl der hydrolysierbaren Ausgangskomponenten, wobei die Komponente (ii) z.B. mit einer β-Dicarbonylverbindung komplexiert ist,
b) Zugabe eines mit der Komponente (i) ggf. vernetzbaren Präpolymeren oder Reaktivverdünners zu dem gemäß a) erhaltenen hydrolytischen Kondensat, wobei die Präpolymeren ein interpenetrierendes Netzwerk aufbauen können,
c) Aufbringen der gemäß (b) erhaltenen Beschichtungslösung auf ein Substrat und Trocknung der Beschichtung, und
d) Aufbringen des Decklacks auf die beschichtete Oberfläche.

Die Erfindung beruht auf der überraschenden Feststellung, dass nur Systeme umfassend ein vernetzbares Expoxysilan der Formel (II) und ein komplexiertes Aluminiumalkoxid der Formel (III) in Verbindung mit einem vernetzbaren bzw. interpenetrierende Polymerstrukturen aufbauenden Präpolymeren oder Reaktivverdünner alle vorgenannten Eigenschaften gleichzeitig erfüllen.

Vorzugsweise werden als vernetzbare Epoxysilane der Formel (II) Glycidyloxypropyltrialkoxysilane, insbesondere 3-Glycidyloxypropyltrimethoxysilan, verwendet.

Ein bevorzugtes Aluminiumalkoxid der Formel (III) ist Aluminium-sek.butylat (ASB).

Im Rahmen der vorliegenden Erfindung sind Alkylreste geradkettige, verzweigte oder cyclische Reste mit 1 bis 20, vorzugsweise 1 bis 10 Kohlenstoffatomen und insbesondere niedere Alkylreste mit 1 bis 6, vorzugsweise 1 bis 4 Kohlenstoffatomen. Spezielle Beispiele sind Methyl, Ethyl, n-Propyl, Isopropyl, n-Butyl, sek.-Butyl, tert.-Butyl, Isobutyl, n-Pentyl, n-Hexyl, Dodecyl, Octadecyl, Cyclohexyl.

Bei dem erfindungsgemäßen Verfahren werden die Aluminiumalkoxide der Formel (III), bevor sie der hydrolytischen Kondensation unterworfen werden, mit einem an sich bekannten Chelat-Liganden im Verhältnis 1:0,5-2 chelatisiert. Bevorzugt ist ein Verhältnis von etwa 1:1. Bevorzugte Chelat-Liganden sind Acetylaceton und Acetessigsäureethylester.

Alternativ können bei den erfindungsgemäßen Verfahren bereits komplexierte Ausgangsverbindungen eingesetzt werden. Diese sind dem Fachmann bekannt und handelsüblich. Verwiesen wird auf den ABCR-Katalog "Metal-Organics for Material & Polymer Technology" aus dem Jahr 2001. Von den auf den Seiten 60 bis 64 aufgelisteten Aluminiumverbindungen bzw. Aluminiumkomplexen sind insbesondere die folgenden besonders für die Verwendung in dem erfindungsgemäßen Verfahren geeignet:
Aluminium-n-butoxid, Aluminium-s-butoxid, Aluminium-s-butoxidbis(ethylacetoacetat), Aluminium-t-butoxid, Aluminium-5-chloro-8-hydroxyquinolinat, Aluminium-di-s-butoxidiethylacetoacetat, Aluminiumdiisopropoxidethylacetoacetat, Aluminiumethoxid, Aluminiumethoxyethoxyethoxid, Di-s-butoxyaluminoxytriethoxysilan, Triethyl(tri-s-butoxy)dialuminium, Aluminiummethacrylat, Aluminium-9-octadecenylacetoacetatdiisopropoxid, Aluminium-III-2,4-pentandionataluminiumacetylacetonat, Aluminiumphenoxid, Aluminiumstearat, Aluminium-III-2,2,6,6-tetramethyl-3,5-heptandionat, Aluminiumhexafluoropentandionat, Aluminium-3-hydroxy-2-methyl-4-pyronat, Aluminium-8-hydroxy-quinolinat, Aluminiumisopropoxid, Alumatran, Aluminiumacrylat.

Die bei dem erfindungsgemäßen Verfahren eingesetzten Präpolymere vernetzen ggf. mit den vernetzbaren Gruppen des Restes R''' gemäß Formel (II) und/oder den vernetzbaren Substituenten an diesen Rest, insbesondere den Epoxygruppen.

Solche Präpolymere sind dem Fachmann an sich bekannt und beispielsweise in der EP-A 0 610 831 beschrieben.

Ebenfalls können im Rahmen der vorliegenden Erfindung Reaktivverdünner anstelle von oder in Vebindung mit solchen Präpolymeren eingesetzt werden.

Diese Präpolymere ermöglichen eine Flexibilisierung der Schicht, da sie an die Silankomponente anbinden und/oder interpenetrierende organische Polymerstrukturen ausbilden können. Die organischen Präpolymere sind vorzugsweise bereits als wässrige Emulsion bzw. Dispersion einzusetzen.

Die besten Schichteigenschaften werden mit solchen Präpolymeren erhalten, die nicht mit der Silankomponente vernetzbar sind, sondern ein eigenständiges interpenetrierendes Netzwerk zum Netzwerk des hydrolysierten Kondensats aufbauen.

Weitere Ausführungsformen der Erfindung sind Gegenstand der Patentansprüche 1 bis 10.

Die Hydrolyse der Sole kann entweder durch verdünnte Säure oder die Zugabe eines Aminosilans katalysiert werden. Ein bevorzugtes Aminosilan ist Aminoethyltriethoxysilan. Als Kondensationskatalysator können auch Mercaptogruppen-haltige Silane eingesetzt werden.

Vorzugsweise wird im Anschluss an die Hydrolyse ein Lösemittelaustausch durchgeführt: Hierbei werden flüchtige Bestandteile im Vakuum bei Raumtemperatur entfernt. Hierdurch wird eine zu starke Kondensation und damit ein Vergelen der Ansätze vermieden, die bei höheren Temperaturen stattfinden würde. Die resultierenden Harze werden dann unter Rühren mit Wasser versetzt.

Während bei der Sol-Synthese zunächst niedrigviskose, wässrig-alkoholische Sole mit relativ niedrigem Flammpunkt resultieren, gelingt es mit dem erfindungsgemäßen Verfahren, die Sole nahezu ohne zusätzliche Lösemittel herzustellen und damit einen relativ einfachen Zugang zu lösemittelfreien bzw.-armen Systemen zu ermöglichen.

Gemäß einer weiteren bevorzugten Ausführungsform wird das hydrolysierte Sol zunächst weiter mit Wasser verdünnt und die leicht flüchtigen organischen Lösemittel werden erst anschließend im Vakuum entfernt. Aus beiden Verfahren resultieren wässrige Sole mit gleicher Molmassenverteilung.

Von den Metallverbindungen konnte die Aluminiumkomponente mit bis zu 35 Mol-% (bezogen auf die hydrolysierbaren Komponenten) in die wässrigen Systeme eingebaut werden. Analoge Titan- und Zirkonverbindungen fallen bei basischer Katalyse als Metalloxide aus.

Folgende Anforderungen können mit den genannten Materialien gleichzeitig erfüllt werden:
1. Die erfindungsgemäßen methanolfreien Sole sind durch zwei verschiedene Vorgehensweisen herstellbar; durch Einsatz von Ethoxyverbindungen bzw. durch nachträglichen Lösungsmittelaustausch. [Die Variante über den Lösungsmittelaustausch ist zu bevorzugen, da der Herstellungsprozess einfacher ist (Ethoxyverbindungen hatten zu lange Hydrolysezeiten).]
2. Wässrige Sole können mit Flammpunkten > 50°C hergestellt werden.
3. Eine einfache, kostengünstige Synthese der erfindungsgemäßen wässrigen Sole ist möglich.
4. Kostengünstige Systeme werden durch Verwendung von 2%-5%igen Solen zugänglich.
5. Die Applikation der erfindungsgemäßen Sole mittels Nasslackverfahren ist einfach durch kurzzeitiges Tauchen (bzw. Sprühen) bei Raumtemperatur möglich.
6. Die Lagerbeständigkeit der erfindungsgemäßen Sole beträgt mindestens 6 Monate.
7. Die Zwischentrocknung von max. 10 Min. bei 120°C ist ausreichend.
8. Erfindungsgemäße Unterbeschichtungen sind mit Schichtdicken ≤ 1 µm zu erreichen.
9. Die Haftung der erfindungsgemäßen Schichten auf den Oberflächen verschiedener Aluminium-Legierungen ist sehr gut.
10. Die initiale Haftung der erfindungsgemäß behandelten Aluminiumoberflächen zu 2K-PUR-Nasslacken bzw. Schichtsystemen aus 2K-EP-Primer und 2K-PUR-Decklack aber auch zu verschiedenen Pulverlacksystemen auf Polyester-Basis ist sehr gut.
11. Die maximale Verformbarkeit der beschichteten Substrate im Dornbiegetest nach ISO 6860 ist für das 2-K-PUR-Nasslacksystem ohne Primer um einen 2 mm Dorn gegeben. Die Verformbarkeit um einen 5 mm Dorn ist für alle Schichtsysteme möglich.
12. Die Feuchtigkeitsbeständigkeit im Kondenswasserklimatest nach DIN 50017 sowie im Kochtest gemäß GPB oder GSB International ist für alle getesteten Schichtverbunde gegeben.
13. Die Beständigkeit im essigsauren Salzsprühtest (ESS nach ISO 9277) ist sowohl für das Nasslacksystem - unabhängig von der Verwendung eines Primer - als auch für die Pulverlacke erreichbar.
14. Nach 1000 h FFK-Test gemäß EN 3665 ist zumindest bei den Nasslacksystemen die Filiformkorrosion auf den erfindungsgemäß behandelten Aluminiumoberflächen deutlich vermindert. Die Untersuchungsergebnisse waren auch hier weitgehend unabhängig von der Verwendung eines Primers.

Die Erfindung wird durch die nachfolgenden Beispiele und Vergleichsbeispiele näher erläutert:

### Beispiel 1

18,91 g 3-Glycidyloxypropyltrimethoxysilan (GPTMS) werden unter Eiskühlung gerührt. In einem separaten Glaskolben werden 4,93 g Aluminiumtrisekundärbutylat (ASB) mit 5,28 g iso-Propanol vermischt, langsam mit 2,00 g Acetylacetonat versetzt und zur Reaktionsmischung gegeben. Dann gibt man 1,02 g 0,1 molare Phosphorsäure und 5,41 g destilliertes Wasser sehr langsam zu. Nach 2 Stunden Rühren bei Raumtemperatur werden flüchtige Bestandteile bei Raumtemperatur im Hochvakuum entfernt und durch destilliertes Wasser ersetzt. Anschließend werden 929,27 g destilliertes Wasser und 3,02 g Epoxidharz, welches zuvor in 30 g Wasser dispergiert wurde, zugesetzt.

Das so erhaltene Sol hat einen Flammpunkt > 65 °C und kann ca. 6 Monate bei 4 °C gelagert werden.

### Beispiele 2-5

Vergleichbare Sole erhält man auch mit den in der Tabelle 1 aufgeführten Zusammensetzungen.

**Tabelle 1**

| Zusammensetzung | Beispiel 2 | Beispiel 3 | Beispiel 4 | Beispiel 5 |
|---|---|---|---|---|
| Glycidyloxypropyltrimethoxysilan (GPTMS) | 6,62 g | 4,61 g | 9,45 g | 9,22 g |
| Aminopropyltriethoxysilan (AMEO) | - | 0,33 g | - | 0,66 g |
| Aluminiumtrisekundärbutylat (ASB) | 1,72 g | 2,22 g | 2,46 g | 4,43 g |
| Acetylacetonat | - | 0,90 g | 1,07 g | 1,8 g |
| Acetessigsäureethylester | 0,91 g | - | - | - |
| Phosphorsäure (0,1 m) | 0,36 g | - | 0,51 g | - |
| organischer Zusatz ¹⁾ | 1,23 g ²⁾ | 0, 5 g ³⁾ | 1,75 g ⁴⁾ | 2,05 g ⁵⁾ |
| Wasser | 264,42 g | 225,48 g | 377,71 g | 476,65 g |
| Lösemittel ⁶⁾ | 2,01 g | 2,60 g | 2,92 g | 5,24 g |

| | | | | |
|---|---|---|---|---|
| 1) Beispiele für organische Zusätze: Präpolymere oder Reaktivverdünner als Quervernetzer oder zum Aufbau eines interpenetrierenden Netzwerkes (vgl. 2 - 5) 2) Epoxidharzemulsion 3) Epoxidharz 4) Acrylatdispersion 5) Acrylat 6) Beispiele für Lösemittel: iso-Propanol, n-Butanol, s-Butanol, Butoxyethanol | | | | |

Die Beschichtungsversuche sowie die an den beschichteten Proben durchgeführten Tests werden im weiteren näher erläutert (siehe "Beschichtungsversuche" sowie Tabellen 2-7).

### Vergleichsbeispiel 1

23,80 g Phenyltrimethoxysilan (PhTMO), 37,25 g Methacryloxypropyltrimethoxysilan (MEMO) und 7,39 g Aluminiumsekundärbutylat, welches zuvor mit 3,00 g Acetylacetonat umgesetzt wurde, werden in einem 3-Halskolben unter Eiskühlung miteinander vermischt. Dann werden 19,23 g destilliertes Wasser zunächst sehr langsam (1/3 Menge innerhalb von 15 min.), dann etwas schneller (Restmenge in ca. 5 min.) zugetropft. Nach 2 h Rühren bei Raumtemperatur werden 14,61 g Essigsäureethylester, 4 g Tetraacrylat und 2,8 g eines Photoinitiators nacheinander zugegeben. Es entsteht eine klare, niedrigviskose Lösung.

### Vergleichsbeispiel 2

59,5 g Phenyltrimethoxysilan (PhTMO), 460,1 g Glycidyloxypropyltrimethoxysilan und 26,9 g Aminopropyltriethoxysilan werden zusammengegeben und unter Eiskühlung gerührt. 147,8 g Aluminiumsekundärbutylat werden mit 78,1 g Acetessigsäureethylester versetzt und langsam zur Reaktionslösung zugegeben. Unter Rühren und bei Beibehaltung der Eiskühlung werden langsam 182,3 g Wasser vorsichtig zugegeben. Nach Abschluss der Hydrolyse werden 88,6 g Epoxidharz D.E.R. 330 (Dow Corning Company) in das Hydrolysat eingerührt.

### Vergleichsbeispiel 3

46,1 g Glycidyloxypropyltrimethoxysilan und 3,3 g Aminopropyltriethoxysilan werden zusammengegeben und unter Eiskühlung gerührt. 29,6 g Zr(OPr)₄ werden mit 11,8 g Acetessigsäureethylester versetzt und langsam zur Reaktionslösung zugegeben. Unter Rühren und bei Beibehaltung der Eiskühlung werden langsam 19 g Wasser vorsichtig zugegeben. Nach Abschluss der Hydrolyse werden 10,6 g Epoxidharz D.E.R. 330 (Dow Corning Company) in das Hydrolysat eingerührt.

### Vergleichsbeispiel 4

46,1 g Glycidyloxypropyltrimethoxysilan und 3,3 g Aminopropyltriethoxysilan werden zusammengegeben und unter Eiskühlung gerührt. 20,4 g Ti(OBu)₄ werden mit 7,8 g Acetessigsäureethylester versetzt und langsam zur Reaktionslösung zugegeben. Unter Rühren und bei Beibehaltung der Eiskühlung werden langsam 19 g Wasser vorsichtig zugegeben. Nach Abschluss der Hydrolyse werden 9,6 g Epoxidharz D.E.R. 330 (Dow Corning Company) in das Hydrolysat eingerührt.

Mit den in den Beispielen 1-5 und den Vergleichsbeispielen 1-4 beschriebenen Solen wurden die nachstehend beschriebenen Beschichtungsversuche durchgeführt.

### Beschichtungsversuche

Für Untersuchungen wurden ca. 10 x 10 cm große Prüfbleche der Aluminiumlegierungen AlMgl und AlMgSi1 verwendet. Auf Grund der großen Anzahl möglicher Beschichtungsvarianten wurde eine Einschränkung vorgenommen, indem in erster Linie die Legierung AlMg1 eingesetzt wurde. Bei vielen Versuchen kamen jedoch auch AlMgSil-Substrate zum Einsatz.

Die Beschichtungsparameter sind in Tabelle 3 enthalten. Alle Bleche wurden mit elma clean 100 (Fa. Elma clean) bzw. nach Angaben von Fa. Henkel mittels P3 almeco 18 vorbehandelt. Folgende Prozeduren gelten als Standardverfahren:
**elma clean100:**
   - Reinigung mit einer wässrigen 5 %igen elma clean 100 Lösung im Ultraschallbad bei 80 °C
   - Spülen mit VE-Wasser bei Raumtemperatur
   - Trocknen im Umluftofen bei 50 °C
**P3 almeco 18:**
   - Reinigung mit einer wässrigen 3,5 %igen P3 almeco 18-Lösung im Ultraschallbad bei 70 °C
   - Spülen mit VE-Wasser bei Raumtemperatur
   - Behandeln mit einer wässrigen 3 %igen Deoxidizer 395H-Lösung im Ultraschallbad bei 30 °C
   - Spülen mit VE-Wasser bei Raumtemperatur
   - Trocknen im Umluftofen bei 50 °C

### Eigenschaften der Schichten auf Aluminiumoberflächen

In der ersten Versuchsreihe wurden vorbehandelte Prüfbleche im Tauchverfahren (Tauch- bzw. Ziehgeschwindigkeit: 10 cm/min, Verweilzeit: 2 sec) beschichtet, 90 min in einem Umlufttrockenschrank bei 130 °C gehärtet und die Eigenschaften der beschichteten Aluminiumbleche nach 24 h Lagerung bei Raumtemperatur ermittelt (Tabelle 4). Für die Schichten kamen folgende Prüfungen zum Einsatz:
- Gitterschnittprüfung nach ISO 2409
- Kochtest gemäß GPB der GSB International
- Kondenswasserklimaprüfung nach DIN 50017

Sowohl die lösemittelhaltigen als auch die wässrigen Systeme haften initial sehr gut auf den Oberflächen der getesteten Aluminiumlegierungen und auch nach der Feuchtebelastung im Kochtest und der Kondenswasserklimaprüfung.

Aufgrund der guten Ausgangsergebnisse wurden alle Systeme erneut synthetisiert und als Ersatz der Chromatierung in Beschichtungsversuchen unter Verwendung verschiedener Deckschichtsysteme eingesetzt.

### Eigenschaften von behandelten Aluminiumoberflächen im Verbund mit 2K-PUR-Nasslack bzw. einem Schichtsystem aus 2K-EP-Primer und 2K-PUR-Decklack

Ein herkömmlicher Nasslack-Beschichtungsverbund für Aluminiumoberflächen besteht aus einem 2K-EP-Primer und einem 2K-PUR-Decklack. Es wurde hier zunächst bewusst auf den sonst üblicherweise verwendeten 2K-EP-Primer verzichtet um zu prüfen, ob mit der Behandlung gleichzeitig die Chromatierung und der Primer ersetzt werden können. Zu Vergleichszwecken wurden Bleche auch mit dem kompletten Anstrichsystem versehen.

Vorbehandelte und beschichtete Prüfbleche wurden jetzt im Umlufttrockenschrank 10 min bei 120 °C zwischengetrocknet und entweder mit dem 2K-PUR-Nasslack oder mit dem kompletten Anstrichsystem überlackiert. Um die Vielzahl der verschiedenen Systeme der vorgenannten Beispiele und Vergleichsbeispiele und die dazugehörigen Variationen miteinander vergleichen zu können, wurden die Bedingungen für die Zwischentrocknung der Schichten im gesamten Testzeitraum beibehalten. Die Sprühapplikation der 2K-Systeme erfolgte manuell mittels Fließbecherpistole SATAminijet (Fa. Sata). Nach jedem Lackauftrag wurden die Schichten 30 min bei 80 °C getrocknet. Alle Vorbehandlungs- und Beschichtungsschritte wurden an einem Tag durchgeführt.

Vor den entsprechenden Laborprüfungen wurden die beschichteten Aluminiumbleche zunächst eine Woche bei Raumtemperatur konditioniert. Die Eigenschaften der beschichteten Aluminiumbleche sind in Tabelle 5 dargestellt. Erste Prüfkriterien für den Schichtverbund waren wiederum
- die Gitterschnittprüfung nach ISO 2409,
- der Kochtest gemäß GPB der GSB International sowie
- die Kondenswasserklimaprüfung nach DIN 50017.
   Die initiale Haftung ist auch hier in allen Fällen sehr gut (Gt 0/0; die Gitterschnittkennwerte liegen bei 0, auch nach zusätzlichem Tesafilmabriss), d.h. wie erwartet haften die Schichten auf den untersuchten Aluminiumsubstraten, aber auch die Haftung in der Zwischenschicht mit der Decklackierung ist gut.
   Allerdings traten in den Vergleichsbeispielen 1 und 2 mit sehr hohen Anteilen der relativ hydrophoben Silane PhTMO und MEMO nach Feuchtebelastung Haftprobleme im Gitterschnittest auf. Diese Systeme wurden daher nicht weiter untersucht und sind nicht in der Tabelle 5 aufgeführt.
   Die oben genannten Tests lassen auf den AlMg1- und AlMgSi1-Blechen nur eine sehr geringe Differenzierung bezüglich der verschiedenen Systeme zu. Daher wurden alle positiv getesteten Beschichtungsvarianten jeweils auf 3 ca. 20 x 10 cm große Aluminiumbleche appliziert und auf Beständigkeit gegenüber Filiformkorrosion gemäß EN 3665 getestet.
   Ferner wurden
- der Dornbiegetest nach ISO 6860 (2 mm Dorn) sowie
- die essigsaure Salzsprühnebelprüfung ESS nach ISO 9277
mit Bestimmung des Blasengrades gem. DIN ISO 53209 durchgeführt.

Die Dornbiegeprüfung ohne 2K-EP-Primer wurde überraschenderweise nur von den erfindungsgemäßen Systemen bestanden (Tab. 5). Dieser Test zeigte weitere Unterschiede auf, die in die gleiche Richtung zeigen wie die Haftung nach Feuchtebelastung. Hier versagten bereits alle Schichtverbunde, sobald die relativ hydrophoben Silane PhTMO und MEMO zum Einsatz kamen (siehe Vergleichsbeispiele 1 und 2).

Für den ebenfalls zeitaufwendigen ESS-Test wurde in den ersten Versuchsreihen festgelegt, dass nur diejenigen Schichtsysteme untersucht werden, die unbegrenzt mit Wasser mischbar sind und im Dornbiegetest um einen 2 mm-Dorn nicht abplatzen. Bei den weiteren Testserien wurden jeweils routinemäßig beschichtete Aluminiumbleche für die ESS-Prüfung hergestellt. In Analogie zum Filiformkorrosionstest kamen auch bei der ESS-Prüfung jeweils 3 beschichtete Aluminiumbleche zum Einsatz.

Die besten Ergebnisse im ESS-Test zeigten die erfindungsgemä-ßen Systeme, welche die Komponenten GLYMO, AMEO und Aluminiumalkoxid, jedoch keine weiteren Metallalkoxide enthalten. Nach einer Prüfzeit von 1000 h ist das jeweilige Anstrichsystem der Aluminiumbleche auf den mit unterbeschichteten Flächen entweder unverändert (= m0/g0; Blasengrad gemäß DIN 53209), oder es ist maximal eine kleinere Lackblase zu erkennen (=ml/g3-4; Blasengrad gemäß DIN 53209), während sich die 2K-PUR-Deckschicht bzw. der komplette Schichtverbund aus 2K-EP-Primer und 2K-PUR-Decklack auf nicht behandelten Flächen meist großflächig abgelöst (= mg5/g5) hat (Tab. 6).

Im direkten Vergleich schneidet der komplexere Schichtaufbau mit 2K-EP-Primer und 2K-PUR-Deckschicht im ESS-Test entweder mit gleichem oder nur geringfügig besserem Ergebnis ab als der Systemverbund mit 2K-PUR-Nasslack. Schichten der basisch katalysierten Sole bieten durchweg einen besseren Schutz als die der sauer katalysierten Sole. Auch geringfügige Unterschiede abhängig von der Reinigungsprozedur lassen sich im ESS-Test erkennen; die Behandlung mit P3 almeco 18 zeigt meist etwas bessere Ergebnisse.

Überraschenderweise zeigten alle Varianten der Vergleichsbeispiele 4 und 5, in denen (zur Ausbildung von Mischoxiden) das Aluminiumalkoxid ganz oder teilweise durch Zirkon- oder Titanester ersetzt ist, nur eine sehr geringe bis gar keine Schutzwirkung im ESS-Test.

In Tabelle 5 sind auch die Ergebnisse der Prüfung auf Filiformkorrosion nach 1000 h im Klimaschrank aufgeführt. Die in mm²/cm angegebenen Werte entsprechen der von Korrosion betroffenen Fläche in Bezug auf die Schwachstellenlänge. Der erste Wert bezieht sich jeweils auf die Fläche ohne, der zweite Wert auf die Fläche mit Unterbeschichtung.

Auf der behandelten Fläche sind die Werte kleiner und damit besser als die Vergleichswerte unbehandelter Proben.

Legt man die Bewertungsstufen gemäß Tab. 6 zugrunde, so wird maximal die Stufe IV erreicht. Am besten schneiden in dieser Testreihe die erfindungsgemäßen Beispiele ab, welche lediglich Aluminium als Heteroelement enthalten. Auch im FFK-Test war die Schutzwirkung der Beschichtungen gemäß den Vergleichsbeispielen 3 und 4 im Vergleich zu den erfindungsgemäßen Schichten deutlich vermindert.

Zum Vergleich sind auch die Ergebnisse von kommerziell chromatierten und beschichteten Aluminiumblechen in Tabelle 5 aufgeführt. Hier traten -abhängig vom Lackaufbau - deutliche Unterschiede nach Feuchteeinwirkung im Kochtest und in der Kondenswasserklimaprüfung auf.

Der 2K-PUR-Decklack alleine platzt von den chromatierten AlMg1-Blech nach dem Koch- bzw. Kondenswasserklimatest in der Gitterschnittprüfung ab. Der für chromatierte Aluminiumoberflächen vorgesehene Schichtaufbau aus 2K-EP-Primer und 2K-PUR-Nasslack ist jedoch beständig unter den genannten Testbedingungen. Im ESS- und FFK-Test traten unabhängig von der Verwendung des 2K-EP-Primers ebenfalls erste Schädigungen auf (Blasen im ESS-Test und fadenförmige Korrosion im FFK-Test). Die Filiformkorrosion ist zwar etwas geringer als bei behandelten Aluminiumblechen, jedoch ebenfalls bereits mit der Stufe IV zu bewerten. Dagegen zeigen die Nasslack-Schichtverbunde in Verbindung mit den erfindungsgemäßen Systemen durchweg weniger Blasenbildung im ESS-Test.

### Eigenschaften von behandelten und mit PES/Primid bzw. PES/PT 910 Pulverlack beschichteten Aluminiumoberflächen

Auch für die Pulverbeschichtung mit einem Polyester/Primid- bzw. Polyester/PT 910-System wurden die verschiedenen ORMO-CER-Sole als Chromatier-Ersatz getestet. Die vorbehandelten und mit den Solen aus den Beispielen und Vergleichsbeispielen beschichteten Prüfbleche wurden wiederum im Umlufttrockenschrank 10 min bei 120 °C getrocknet. Die vollständige Beschichtung der Proben war hier nicht an einem Tag möglich. Innerhalb einer Woche wurden alle Aluminiumbleche mit den verschiedenen Systemen ausgerüstet (je Variante 2 ca. 10 x 10 cm und 6 ca. 20 x 10 cm große Aluminiumbleche). Die Pulverbeschichtung wurde dann in einer industriellen Pulverlackieranlage in einem Arbeitsgang durchgeführt. Die Härtung erfolgte 20 min bei 165 °C und zusätzlich 12 min bei 180 °C.

Vor den Laborprüfungen wurden auch die pulverbeschichteten Aluminiumbleche mindestens eine Woche bei Raumtemperatur konditioniert. Die Prüfkriterien für den Schichtverbund waren die gleichen wie für die Nasslacke.

Die Eigenschaften der beschichteten Aluminiumbleche sind in Tabelle 7 wiedergegeben. Auch hier ist die Haftung initial sowie nach dem Kochtest und der Kondenswasserklimaprüfung in allen Fällen sehr gut, d.h. die Schichten haften sowohl auf den untersuchten Aluminiumsubstraten als auch in der Zwischenschicht mit der Decklackierung. Im Gegensatz zu den Untersuchungen mit PUR-Nasslack war hier die Haftung ohne Unterbeschichtung ebenfalls gut. Haftung, Kochtest und Kondenswasserklimaprüfung lassen also für den getesteten Pulverlack keine Differenzierung zu.

Die Beständigkeit bezüglich der Dornbiegeprüfung ist vergleichbar den Ergebnissen mit Nasslack.

Nach 1000 h ESS-Test ist die Deckschicht der Aluminiumbleche auf den mit unterbeschichteten Flächen entweder unverändert (= m0/g0), oder es ist maximal eine kleinere Lackblase zu erkennen (= m1/g3). Nicht behandelte Flächen weisen auf einigen Proben bereits Enthaftung und Filiformkorrosion auf.

Es wurden auch pulverlackierte Aluminiumbleche beider Legierungen auf Beständigkeit gegenüber Filiformkorrosion nach Animpfen mit HCl und 1000 h im Klimaschrank getestet. Die Ergebnisse sind ebenfalls.in Tabelle 7 zusammengestellt. Bei der Pulverbeschichtung mit einem Polyester/Primid-System scheint eine Unterbeschichtung keinen Einfluss auf die Beständigkeit gegenüber der Filiformkorrosion zu haben. Die Werte für die Filiformkorrosion variieren sowohl auf behandelten als auch auf unbehandelten Flächen sehr stark.

Zum Vergleich wurden auch chromatierte AlMg1-Bleche mit PES/Primid Pulverlack beschichtet und geprüft. Unterschiede zur Behandlung sind hauptsächlich nach 1000-stündiger Belastung im ESS- bzw. FFK-Test gegeben. Bei den chromatierten Blechen trat nach beiden Prüfungen Filiformkorrosion auf, wobei der korrosive Angriff im ESS-Test sogar ausgeprägter war als im FFK-Test.

**Tabelle 2:**

| **Beispiel** | **Vgl.-Bsp. 1** | **Vgl.-Bsp.2** | **Beispiel 4/5** | **Beispiele 1-3** | **Vgl.-Bsp.3** | **Vgl.-Bsp. 4** |
|---|---|---|---|---|---|---|
| **Zusammensetzung** | Acrylat-Basis | Epoxid-Basis | Epoxy-Acrylat-Basis | Expoxid-Basis | Epoxid-Basis / Zr | Epoxid-Basis / Ti |
| **ROH** | 44,1 %¹⁾ | 52,6%¹⁾// <20%²⁾ | 19,9 %¹⁾ < 1%²⁾ | 19.6%¹⁾// 1 %²⁾ | 60 % - 80 % | 60 % - 80 % |
| **MeOH** | 20,3%¹⁾ | 14,7%¹⁾// < 2 %²⁾ | 8,2%¹⁾ <<1%²⁾ | 8,9%¹⁾// << 1%²⁾ | 6,0%¹⁾// << 1%²⁾ | 6,4%¹⁾// << 1%²⁾ |
| **Mischbarkeit mit Wasser** | < 10%^{3,4)} | < 30%³⁻⁴⁾ | unbegrenzt ^{3.4)} | unbegrenzt ^{3/4)} | < 10 % ³⁾// | < 10 % ³⁾// |
| **Flammpunkt (DIN 55679)** | 20 °C | 24 °C ¹⁾ // 52 °C ²⁾ | 30 °C ¹⁾ // 65 °C ²⁾ | 30 °C ¹⁾ // 76 °C ²⁾ | 21 °C ¹⁾// 45 °C 2) | 21 °C ¹⁾// 52 °C 2) |

| | | | | | | |
|---|---|---|---|---|---|---|
| 1) ohne Lösemittelaustausch 2) nach Lösemittelaustausch 3) basisch katalysiert 4) sauer katalysiert | | | | | | |

**Tabelle 3: Beschichtungsparameter**

| | |
|---|---|
| **Probenvorbehandlung** | Elma clean bzw. almeco 18 |
| **Aluminiumlegierung** | AlMg1 (bzw. AIMgSi1) |
| **Sol-Beschichtung** | Tauchen |
| **Härtung (Tab. 4)** | 90 min / 130 °C |
| **Zwischentrocknung** | 10 min / 120 °C |
| **Decklackierung (Variante 1)** | 2K-PUR-Nasslack (Sprühen) |
| **Trocknung (Tab. 5)** | 30 min / 80 °C |
| **Decklackierung (Variante 2**) | Pulverlack PES / Primid bzw. PT 910 (Sprühen) |
| **Härtung (Tab. 7)** | 20 min / 165 °C und 12 min / 180 °C |

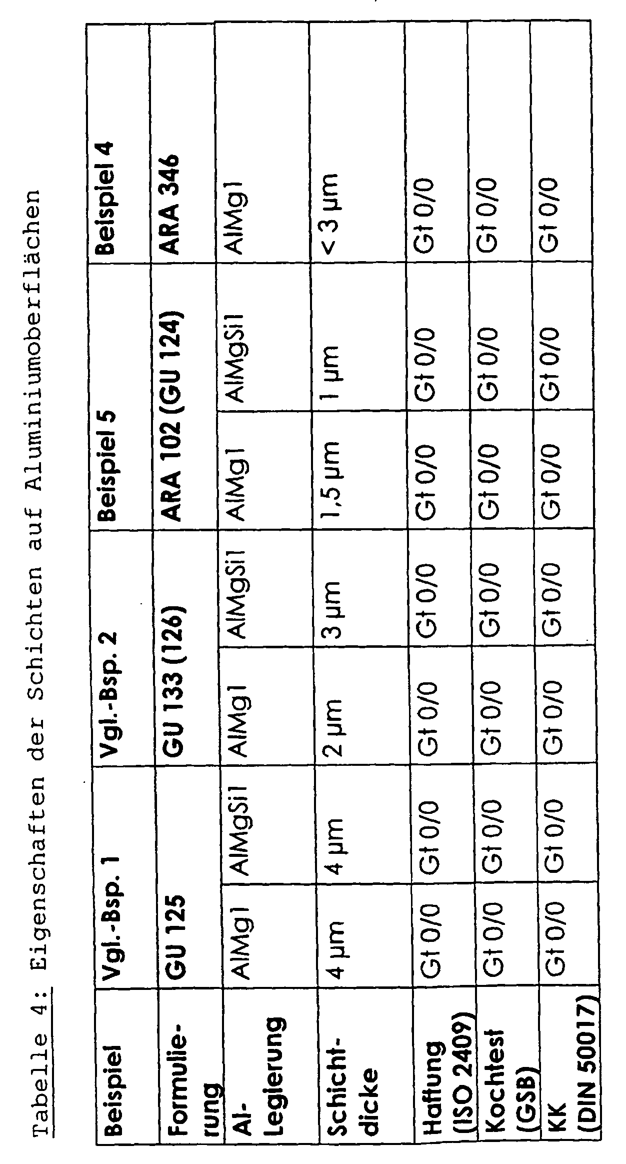

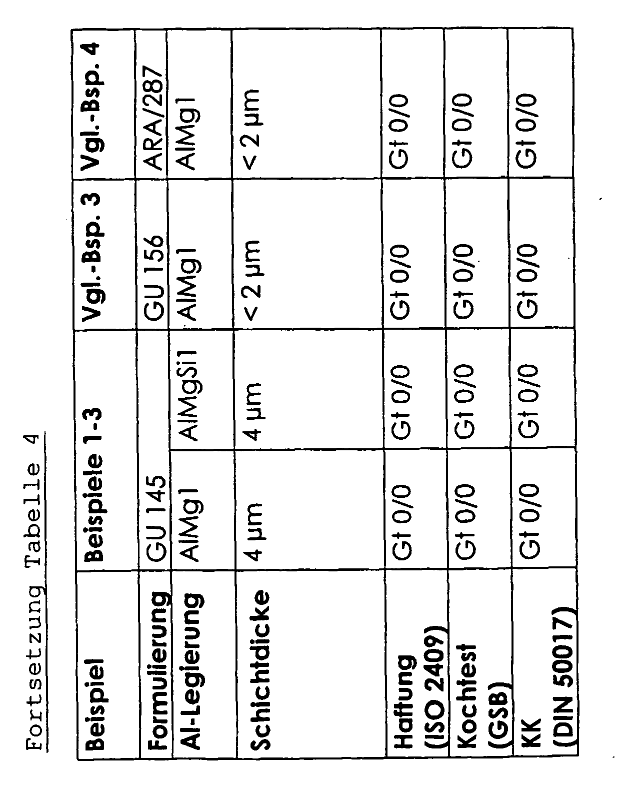

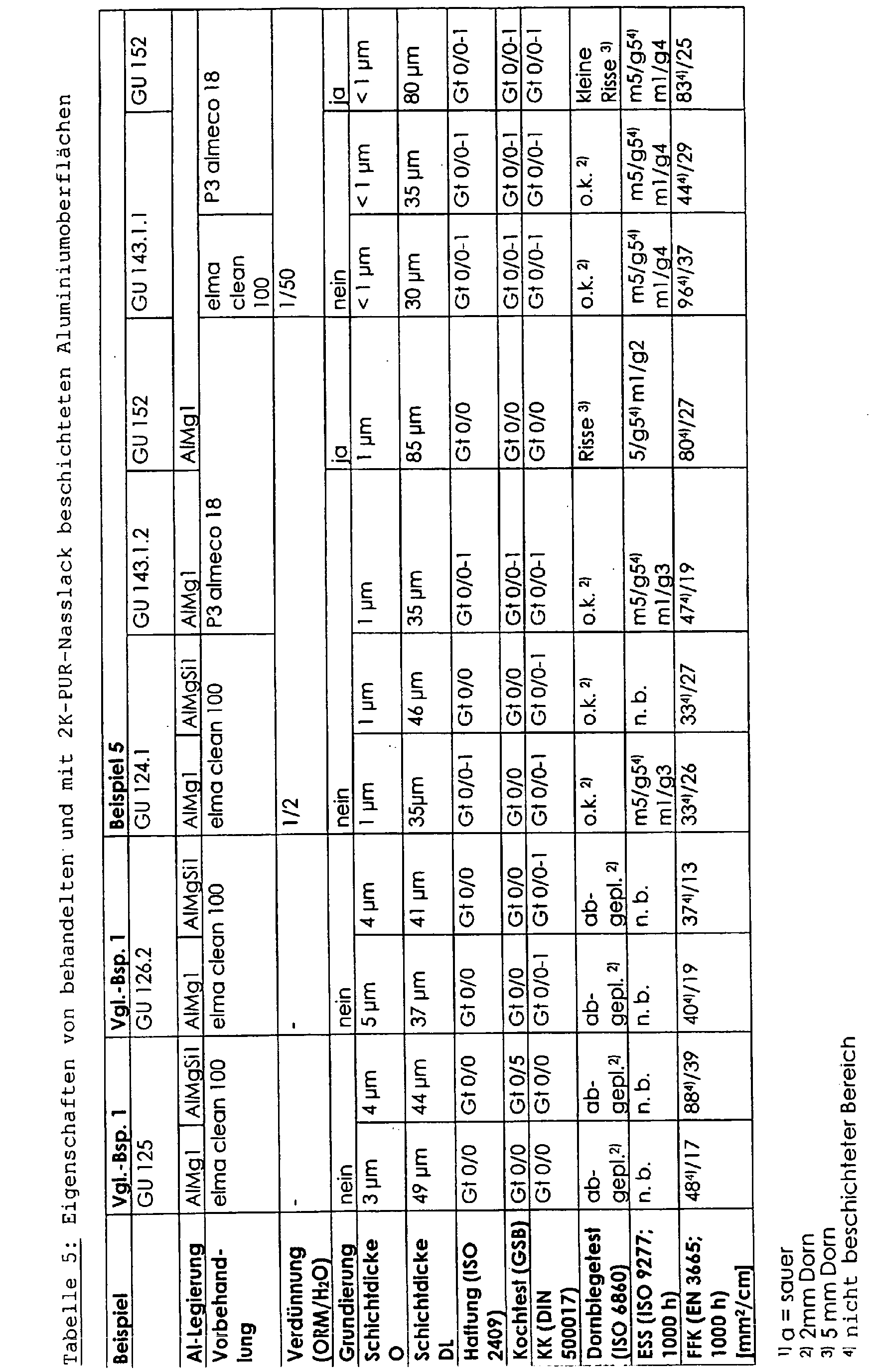

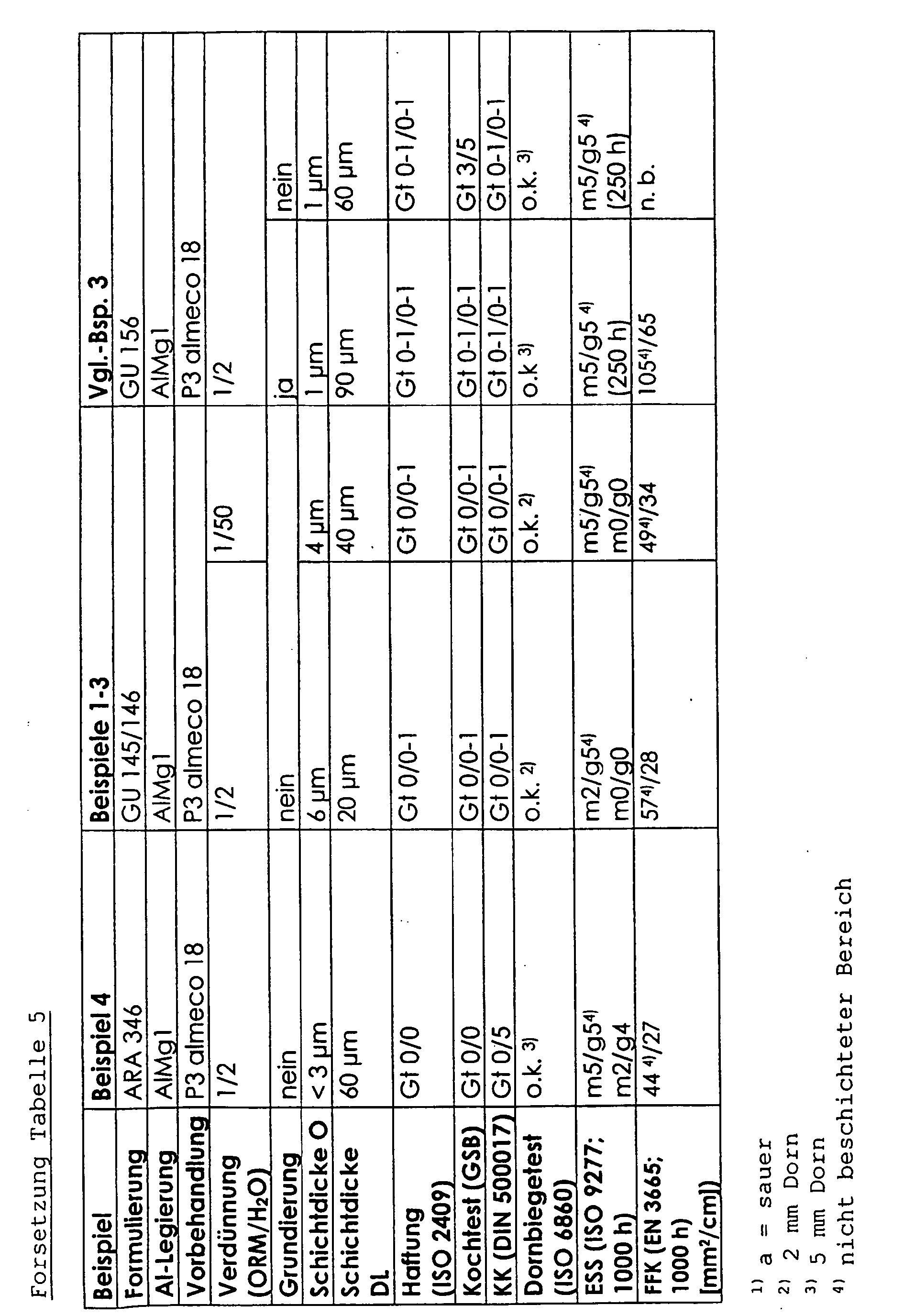

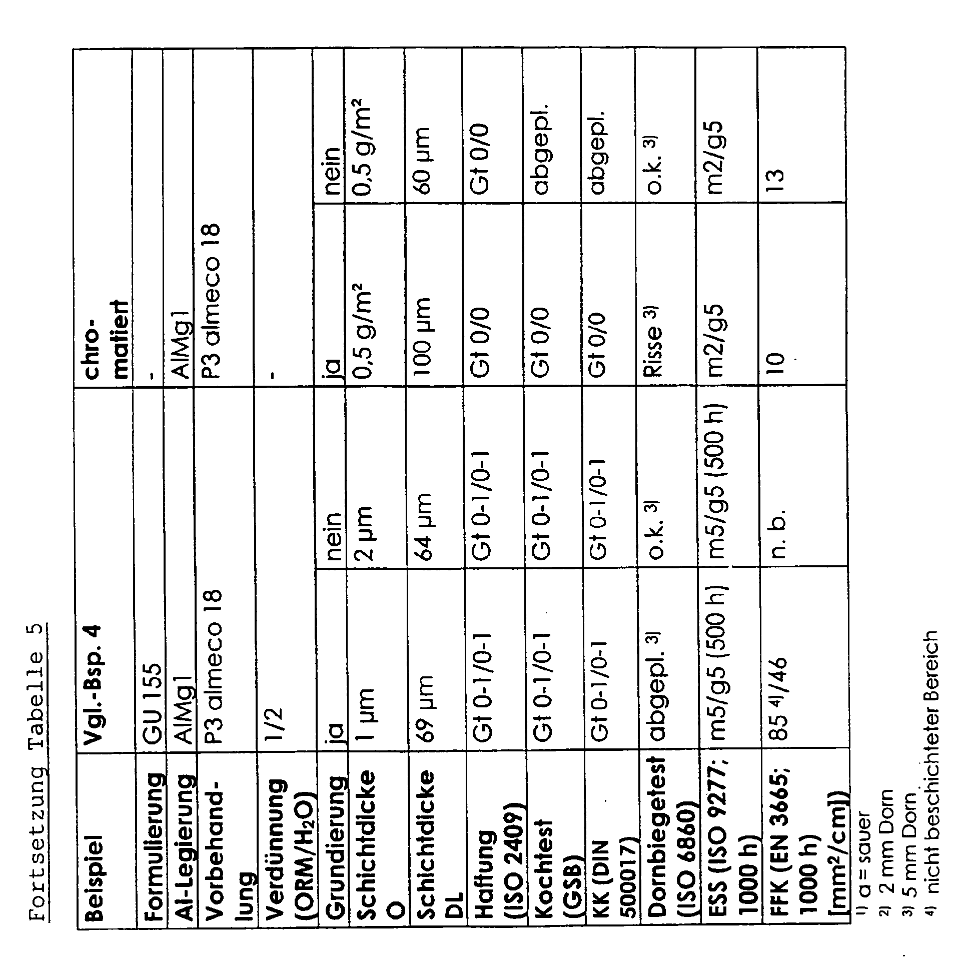

**Tabelle 6: Bewertungsstufen für den Grad der Filiformkorrosion (Die von Korrosion betroffenen Flächen werden in Bezug auf die Schwachstellenlänge erfasst)**

| Bewertungsstufe | Erläuterung |
|---|---|
| I | Keine bis sehr schwache FFK (0,0 - 0,5 mm²/cm) |
| II | Schwache FFK (> 0,5 - 2,0 mm²/cm) |
| III | Mittlere FFK (> 2,0 - 5,0 mm²/cm) |
| IV | Starke FFK (> 5,0 - 25 mm²/cm) |
| V | Sehr starke FFK (> 25 mm²/cm) |

**Tabelle 7: Eigenschaften von behandelten und mit Pulverlack beschichteten Aluminiumoberflächen**

| **Beispiel** | **Vgl.-Bsp. 1** | | **Vgl.-Bsp.2** | | **Beispiel 5** | | | **Beispiel 5¹⁾** | | **Beispiel** |
|---|---|---|---|---|---|---|---|---|---|---|
| | GU 125 | | GU 126 | | ARA 102 | | ARA 363 | GU 124.1 | | ARA 364 |
| **Decklack** | PES/Primid | | PES/Primid | | PES/Primid | | PES/PT 910 | PES/Primid | | PES/PT 910 |
| **Al-Legierung** | AIMgl | AlMgSil | AIMgl | AIMgsil | AIMgl | AIMgSil | AIMgl | AIMgl | AIMgSil | AIMgl |
| **Schichtdicke O** | 3 µm | 4 µm | 2 µm | 3 µm | 2 µm | 1 µm | 2 µm | 1 µm | 1 µm | 1 µm |
| **Schichtdicke DL** | 75 µm | 92 µm | 87 µm | 75 µm | 75 µm | 64 µm | 50 µm | 81 µm | 71 µm | 45 µ |
| **Haftung (ISO 2409)** | Gl 0/0 | Gt 0/1 | Gt 0/0 | Gt 0/0 | Gt 0/0 | Gt 0/0 | Gt 0/0 | Gt 0/0 | Gt 0/0 | GT 0/0 |
| **Kochtest (GSB)** | Gt 0/0 | Gt 0/0 | Gt 0/0 | Gt 0/0 | Gt 0/0 | Gt 0/0 | Gt 0/0 | Gt 0/0 | Gt 0/0 | Gt 0/0 |
| **KK (DIN 50017)** | Gt 0/0 | Gt 0/0 | Gt 0/0 | Gt 0/0 | Gt 0/0 | Gt 0/0-1 | Gt 0/0 | Gt 0/0 | Gt 0/0 | Gt 0/0 |
| **Dornblegetest (ISO 6860)** | abgepl.³⁾ | Risse ³⁾ | o. k. (Rand abgepl.) ³⁾ | o. k. (Rand abgepl.) ³⁾ | o. k. ³⁾ | o. k. ³⁾ | o. k. ⁴⁾ | o. k. ³⁾ | o.k. ³⁾ | o.k. ⁴⁾ |
| **ESS (ISO 9277; 1000 h)** | ml/g55) m0/g0 | n. b. | m5/g5 ⁵⁾ ml/g3 | n. b | m0/g0 | 50 % ⁵⁾ m0/g0 | m2/g4 ⁵⁾ m0/g0 | m0/g0⁵⁾ m0/g0 | 30 % ⁵⁾ ml/g3 | ml/gl |
| **FFK (EN 3665; mm²/cm)** | ca. 30 | 82⁵⁾/100 | 3 ⁵⁾/28 | 90 | 11 ⁵⁾/47 | 44⁵⁾/67 | 58⁵⁾/42 | 50 | 74 | 10⁵⁾/36 |

| | | | | | | | | | | |
|---|---|---|---|---|---|---|---|---|---|---|
| 1) w = wässrig 2) a = sauer 3) 2 mm Dorn 4) 5 mm Dorn 5) nicht beschichteter Bereich | | | | | | | | | | |

## Patentansprüche

1. Verfahren zur Beschichtung von Oberflächen zum Erhalt einer Zwischenschicht auf der Oberfläche zur Anbindung eines Decklacks, umfassend die folgenden Stufen:
a) hydrolytische Kondensation, gegebenenfalls in Anwesenheit eines Kondensationskatalysators und/oder Additiven der folgenden Komponenten:
(i) eines vernetzbares Silans der Formel (II)
R'''ₘSiX₍₄₋ₘ₎
in der die Gruppen X, die gleich oder verschieden sein können, Wasserstoff, Halogen, Alkoxy, Acyloxy, Alkylcarbonyl, Alkoxycarbonyl oder -NR''₂ (R'' = H und/oder Alkyl) bedeuten und die Reste R''', die gleich oder verschieden sein können, Alkyl, Alkenyl, Akinyl, Aryl, Arylalkyl, Alkylaryl, Arylalkenyl, Alkenylaryl, Arylakinyl oder Alkinylaryl darstellen, wobei diese Reste durch O- oder S-Atome oder die Gruppe -NR'' unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy- oder Vinylgruppen tragen können und m den Wert 1, 2 oder 3 hat, und/oder einem davon abgeleiteten Oligomeren, wobei einer der Reste R''' und/oder der Substituent eine vernetzbare Epoxygruppe ist bzw. umfasst, in einer Menge von 20 bis 90 Mol-%, bezogen auf die Gesamtmolzahl der hydrolysierbaren Ausgangskomponenten, und
(ii) eines Aluminiumalkoxids der Formel (III)
Al (OR')₃
worin die Reste R', die gleich oder verschieden sein können, für Alkyl oder-(CH₂)ₓ-O-(CH₂)_{y}-CH₃, worin x eine ganze Zahl von 1 bis 6 und y eine ganze Zahl von 0 bis 6 bedeutet, stehen, in einer Menge von 10 bis 50 Mol-%, bezogen auf die Gesamtmolzahl der hydrolysierbaren Ausgangskomponenten, wobei die Komponente (ii) komplexiert ist,
b) Zugabe eines mit der Komponente (i) ggf. vernetzbaren Präpolymeren oder Reaktivverdünners zu dem gemäß a) erhaltenen hydrolytischen Kondensat, wobei die Präpolymeren ein interpenetrierendes Netzwerk aufbauen können,
c) Aufbringen der gemäß (b) erhaltenen Beschichtungslösung auf ein Substrat und Trocknung der Beschichtung und
d) Aufbringen des Decklacks auf die beschichtete Oberfläche.

2. Verfahren nach Anspruch 1, **dadurch gekenn** - **zeichnet, dass** das vernetzbare Silan der Formel (II) Glycidyloxypropyltrimethoxysilan ist und als Aluminiumalkoxid der Formel (III) Aluminium-sek.butylat verwendet wird.

3. Verfahren nach den Ansprüchen 1 bis 2, **dadurch ge** - **kennzeichnet, dass** das Präpolymer in einer Menge von 2 bis 95 Mol-%, bezogen auf die Gesamtmolzahl der Ausgangskomponenten, zugesetzt wird.

4. Verfahren nach den Ansprüchen 1 bis 3, **dadurch ge** - **kennzeichnet, dass** die Additive ausgewählt sind aus organischen Verdünnungsmitteln, Verlaufmitteln, Färbemitteln, UV-Stabilisatoren, Füllstoffen, Viskositätsreglern, Gleitmitteln, Netzmitteln, Antiabsetzmitteln oder Oxidationsinhibitoren oder Mischungen davon.

5. Verfahren nach den Ansprüchen 1 bis 4, **dadurch ge** - **kennzeichnet, dass** man einen basischen Kondensationskatalysator ausgewählt aus Aminosilanen und Mercaptosilanen verwendet.

6. Verfahren nach den Ansprüchen 1 bis 4, **dadurch** ge - **kennzeichnet, dass** man als Kondensationskatalysator eine Säure verwendet.

7. Verfahren nach Anspruch 6, **dadurch gekennzeich** - **net, dass** der Kondensationskatalysator Phosphorsäure ist.

8. Verfahren nach den Ansprüchen 1 bis 7, **dadurch ge** - **kennzeichnet, dass** man vor Stufe b) einen Lösemittelaustausch durchführt.

9. Verfahren nach Anspruch 1, **dadurch gekenn** - **zeichnet, dass** man vor dem Aufbringen des Decklacks das beschichtete Substrat mit einem Primer behandelt.

10. Beschichtete Substrate erhältlich nach dem Verfahren nach einem der Ansprüche 1 bis 9.

## Claims

1. Process for coating surfaces to obtain an intermediate layer on the surface for binding a top coating, comprising the following stages:
a) hydrolytic condensation, optionally in the presence of a condensation catalyst and/or additives, of the following components:
(i) a crosslinkable silane of the formula (II)
R"'ₘSiX₍₄₋ₘ₎
in which the groups X, which can be identical or different, denote hydrogen, halogen, alkoxy, acyloxy, alkylcarbonyl, alkoxycarbonyl or -NR"₂ (R" = H and/or alkyl) and the radicals R"', which can be identical or different, represent alkyl, alkenyl, alkinyl, aryl, arylalkyl, alkylaryl, arylalkenyl, alkenylaryl, arylalkinyl or alkinylaryl, wherein these radicals can be interrupted by O or S atoms or the group -NR" and can carry one or more substituents from the group consisting of halogens and optionally substituted amino, amide, aldehyde, keto, alkylcarbonyl, carboxyl, mercapto, cyano, hydroxyl, alkoxy, alkoxycarbonyl, sulphonic acid, phosphoric acid, acryloxy, methacryloxy, epoxide or vinyl groups, and m has the value 1, 2 or 3, and/or an oligomer derived therefrom, wherein one of the radical R"' and/or the substituent is or includes a crosslinkable epoxide group, in an amount of 20 to 90 mol%, based on the total number of moles of the hydrolysable starting components, and
(ii) an aluminium alkoxide of the formula (III)
Al(OR')₃
wherein the radicals R', which can be identical or different, represent alkyl or -(CH₂)ₓ-O-(CH₂)_{y}-CH₃, wherein x denotes an integer from 0 to 6 and y denotes an integer from 0 to 6, in an amount of 10 to 50 mol%, based on the total number of moles of the hydrolysable starting components, component (ii) being complexed,
b) addition of a prepolymer or reactive diluent which is optionally crosslinkable with component (i) to the hydrolytic condensate obtained according to a), it being possible for the prepolymers to build up an interpenetrating network,
c) application of the coating solution obtained according to (b) to a substrate and drying of the coating, and
d) application of the top coating on the coated surface.

2. Process according to claim 1, **characterized in that** the crosslinkable silane of the formula (II) is glycidyloxypropyltrimethoxysilane and aluminium sec-butylate is used as the aluminium alkoxide of the formula (III).

3. Process according to claims 1 to 2, **characterized in that** the prepolymer is added in an amount of 2 to 95 mol%, based on the total number of moles of the starting components.

4. Process according to claims 1 to 3, **characterized in that** the additives are chosen from organic diluents, flow agents, colouring agents, UV stabilizers, fillers, viscosity regulators, lubricants, wetting agents, antisedimentation agents or oxidation inhibitors or mixtures thereof.

5. Process according to claims 1 to 4, **characterized in that** a basic condensation catalyst is chosen from aminosilanes and mercaptosilanes.

6. Process according to claims 1 to 4, **characterized in that** an acid is used as the condensation catalyst.

7. Process according to claim 6, **characterized in that** the condensation catalyst is phosphoric acid.

8. Process according to claims 1 to 7, **characterized in that** a solvent exchange is carried out before stage b).

9. Process according to claim 1, **characterized in that** the coated substrate is treated with a primer before application of the top paint.

10. Coated substrates obtainable by the process according to one of claims 1 to 9.

## Revendications

1. Procédé de revêtement de surfaces permettant d'obtenir une couche intermédiaire sur la surface pour l'accrochage d'une laque de finition, comprenant les étapes suivantes :
a) la condensation hydrolytique, le cas échéant en présence d'un catalyseur de condensation et/ou d'additifs des composants suivants :
(i) un silane réticulable de formule (II)
R'" ₘSiX₍₄₋ₘ₎
dans laquelle les groupes X, qui peuvent être identiques ou différents, représentent l'hydrogène, l'halogène, l'alcoxy, l'acyloxy, l'alkylcarbonyle, l'alcoxycarbonyle ou -NR''₂ (R'' = H et/ou alkyle) et les radicaux R''', qui peuvent être identiques ou différents, représentent alkyle, alcényle, acinyle, aryle, arylalkyle, alkylaryle, arylalcényle, alcénylaryle, arylacinyle ou alcinylaryle, où ces radicaux peuvent être interrompus par des atomes de O ou de S ou le groupe -NR" et peuvent porter un ou plusieurs substituants du groupe des halogènes et des groupes amino, amide, aldéhyde, céto, alkylcarbonyle, carboxy, mercapto, cyano, hydroxy, alcoxy, alcoxycarbonyle, acide sulfonique, acide phosphorique, acryloxy, méthacryloxy, époxy ou vinyle éventuellement substitués et m a la valeur 1, 2 ou 3, et/ou un oligomère dérivé de ceux-ci, où un des radicaux R''' et/ou le substituant est ou comprend un groupe époxy réticulable, en une quantité de 20 à 90 % en moles, par rapport au nombre molaire total des composants de départ hydrolysables, et
(ii) un alcoxyde d'aluminium de formule (III)
Al (OR')₃
dans laquelle les radicaux R', qui peuvent être identiques ou différents, représentent un groupe alkyle ou -(CH₂)ₓ-O-(CH₂)_{y}-CH₃, où x représente un nombre entier de 1 à 6 et y un nombre entier de 0 à 6, en une quantité de 10 à 50 % en moles, par rapport au nombre molaire total des composants de départ hydrolysables, où le composant (ii) est complexé,
b) addition d'un prépolymère le cas échéant réticulable avec le composant (i) ou diluant réactif au condensé hydrolytique obtenu d'après le a), où les prépolymères peuvent constituer un réseau d'interpénétration,
c) dépôt de la solution de revêtement obtenue d'après le b) sur un substrat et séchage du revêtement et
d) dépôt de la laque de finition sur la surface revêtue.

2. Procédé selon la revendication 1, **caractérisé en ce que** le silane réticulé de formule (II) est le glycidyloxy-propyltriméthoxysilane et que l'on utilise à titre d'alcoxyde d'aluminium de formule (III) le sec.-butylate d'aluminium.

3. Procédé selon les revendications 1 à 2, **caractérisé en ce que** le prépolymère est additionné en une quantité de 2 à 95 % en moles, par rapport au nombre molaire total des composants de départ.

4. Procédé selon les revendications 1 à 3, **caractérisé en ce que** les additifs sont choisis parmi les diluants organiques, les éluants, les colorants, les stabilisateurs d'UV, les charges, les régulateurs de viscosité, les agents de glissement, les agents mouillants, les agents antiredéposition ou les inhibiteurs d'oxydation ou leurs mélanges.

5. Procédé selon les revendications 1 à 4, **caractérisé en ce que** l'on utilise un catalyseur de condensation basique choisi parmi les aminosilanes et les mercaptosilanes.

6. Procédé selon les revendications 1 à 4, **caractérisé en ce que** l'on utilise comme catalyseur de condensation un acide.

7. Procédé selon la revendication 6, **caractérisé en ce que** le catalyseur de condensation est l'acide phosphorique.

8. Procédé selon les revendications 1 à 7, **caractérisé en ce que** l'on réalise un échange de solvant avant l'étape b).

9. Procédé selon la revendication 1, **caractérisé en ce que** l'on traite avec une couche d'apprêt le substrat revêtu avant le dépôt de la laque de finition.

10. Substrats revêtus pouvant être obtenus d'après le procédé selon l'une des revendications 1 à 9.
